# EUROPEAN PATENT SPECIFICATION

(11) **EP 4 297 160 B1**
(45) Date of publication and mention of the grant of the patent: **08.10.2025**
(21) Application number: 22893054.1
(22) Date of filing: 18.10.2022
(51) Int. Cl.: H01M 50/204, H01M 50/209, H01M 50/244, H01M 50/271, H01M 50/296, H01M 50/50, B25J 19/00, H01M 10/42, H01M 50/24, H01M 50/247, H01M 50/298

(54) **BATTERY MODULE WITH IMPROVED WATERPROOF AND DUSTPROOF PERFORMANCE AND BATTERY PACK INCLUDING SAME**
BATTERIEMODUL MIT VERBESSERTER WASSER- UND STAUBDICHTER LEISTUNG UND BATTERIEPACK DAMIT
MODULE DE BATTERIE AYANT UNE PERFORMANCE ÉTANCHE À L'EAU ET À LA POUSSIÈRE AMÉLIORÉE ET BLOC-BATTERIE LE COMPRENANT

(30) Priority: 11.11.2021 KR 20210154408
(43) Date of publication of application: 27.12.2023
(73) Proprietor: LG Energy Solution Ltd., 07335 Seoul (KR)
(72) Inventor: YANG, Seong Hwan, Daejeon 34122 (KR); BAE, Mun Jun, Daejeon 34122 (KR); YOO, Dong Won, Daejeon 34122 (KR)
(74) Representative: Plasseraud IP
(86) International application number: PCT/KR2022/015896
(87) International publication number: WO 2023/085631

(56) References cited:
- WO-A1-2020/162122
- WO-A1-2020/162122
- KR-A- 20160 036 495
- KR-A- 20200 092 440
- KR-A- 20210 093 637
- KR-B1- 102 075 097
- US-A- 3 320 096

## Description

### [Technical Field]

This application claims the benefit of priority to Korean Patent Application No. 2021-0154408 filed on November 11, 2021.

The present invention relates to a battery module having improved waterproof and anti-vibration performance and a battery pack including the same, and more particularly to a battery module exhibiting excellent waterproof and anti-vibration effects without a sealing gasket and a battery pack including the same.

### [Background Art]

With recent development of alternative energies due to air pollution and energy depletion caused as the result of use of fossil fuels, demand for secondary batteries capable of storing electrical energy that is produced has increased. Secondary batteries, which are capable of being charged and discharged, are widely used in various fields, such as mobile devices, electric vehicles, hybrid electric vehicles, and industrial robots.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle.

Meanwhile, a battery module is generally configured to have a structure in which a plurality of battery cells is received in a case configured to be divided into an upper part and a lower part, whereby the battery cells are protected from external impact and permeation of moisture or introduction of various kinds of foreign matter thereinto are prevented.

Since most battery modules satisfy merely IP63 rating corresponding to water resistance, however, application of the battery modules to devices or environments is limited.

Of course, it is possible to satisfy IP53 rating by providing a sealing gasket at a region at which an upper case and a lower case are brought into tight contact with each other. In this case, however, there are problems in that the sealing gasket must be separately provided and a receiving portion configured to allow the gasket to be seated thereon must be accurately formed.

### (Prior Art Document)

(Patent Document 1) Korean Patent Application Publication No. 2014-0081949 (published on July 2, 2014)
Documents WO 2020/162122 A1 and US 3320096 A relate to the sealing of battery cases.

### [Disclosure]

### [Technical Problem]

The present invention has been made in view of the above problems, and it is an object of the present invention to provide a battery module exhibiting excellent waterproof and anti-vibration performance without provision of a sealing gasket and a battery pack including the same.

It is another object of the present invention to provide a battery module having excellent waterproof and anti-vibration performance configured such that assembly and fastening are easily performed even though some tolerance occurs during formation of a module case and a battery pack including the same.

### [Technical Solution]

To this end, the invention relates to a battery module according to claim 1. The battery module after the invention may present one or more of the features of dependent claims 2 to 6, in any combination allowed by the claims.

The invention also relates to a battery pack after claim 7. The battery pack after the invention may present one or more of the features of dependent claims 8 to 11, in any combination allowed by the claims.

### [Advantageous Effects]

As is apparent from the above description, a battery module according to the present invention and a battery pack including the same have a merit in that each of a lower rib of a lower case and an upper rib of an upper case is constituted by a plurality of surfaces bent or cut by predetermined angles such that the lower rib and the upper rib are brought into tight contact with each other by one face contact and two line contacts, whereby it is possible to achieve excellent waterproof and anti-vibration effects.

In addition, the battery module according to the present invention and the battery pack including the same have an advantage in that a plurality of space portions is provided between the lower rib and the upper rib, and the upper rib is provided with a curved portion having a predetermined radius of curvature, whereby it is possible to simultaneously achieve waterproof and anti-vibration effects while performing easy fastening even though some tolerance occurs during a manufacturing process.

### [Description of Drawings]

FIG. 1 is a perspective view of a battery pack according to a preferred embodiment of the present invention.
FIG. 2 is an enlarged perspective view of a lower case corresponding to part A of FIG. 1.
FIG. 3 is an enlarged perspective view of an upper case corresponding to part A of FIG. 1.
FIG. 4 is an enlarged perspective view of the upper case shown in FIG. 3 when viewed from another angle.
FIG. 5 is a sectional view illustrating a coupling structure between the lower case and the upper case corresponding to part A of FIG. 1.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery module having improved waterproof performance according to the present invention and a battery pack including the same will be described with reference to the accompanying drawings.

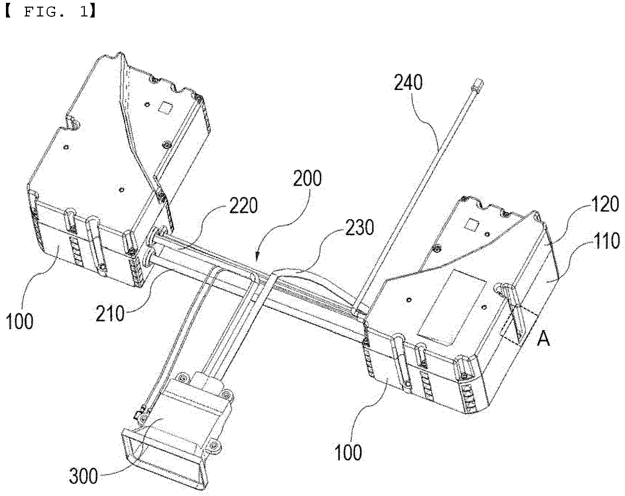

FIG. 1 is a perspective view of a battery pack according to a preferred embodiment of the present invention. Referring to FIG. 1, the battery pack according to the present invention may be applied to a device, such as a humanoid robot, and may include a battery module 100, a cable 200, and a connection terminal 300.

Specifically, a pair of battery modules 100 located spaced apart from each other by a predetermined distance may be provided, and the battery modules 100 will be described below in detail.

The cable 200, which is configured to electrically connect the battery modules 100 to each other or to allow communication with the device to be performed therethrough, may be constituted by a first cable 210, a second cable 220, a third cable 230, and a fourth cable 240.

Specifically, the first cable 210 electrically connects the pair of battery modules 100 to each other, and the second cable 220 may be a positive electrode cable having one side connected to one of the battery modules 100 and the other side connected to the connection terminal 300. The third cable 230 may be a negative electrode cable having one side connected to the other battery module 100 and the other side connected to the connection terminal 300.

Of course, it is obvious that, when the second cable 220 is a negative electrode cable, the third cable 230 is a positive electrode cable.

Meanwhile, the fourth cable 240, which is a cable for wireless communication, may transmit various kinds of information of the battery pack. As an example, when the battery pack according to the present invention is mounted in a robot, the fourth cable may transmit the status of the battery pack to a user located at a long distance in a wireless manner, and may also receive a signal for controlling the battery pack as needed. Such wireless transmission and reception and control may be implanted through known technology, and therefore a detailed description thereof will be omitted.

As previously described, the connection terminal 300, to which one side of each of the second cable 220 and the third cable 230 corresponding respectively to a positive electrode and a negative electrode is connected, is fastened to a power reception terminal (not shown) of the device, through which the device receives power so as to be operated.

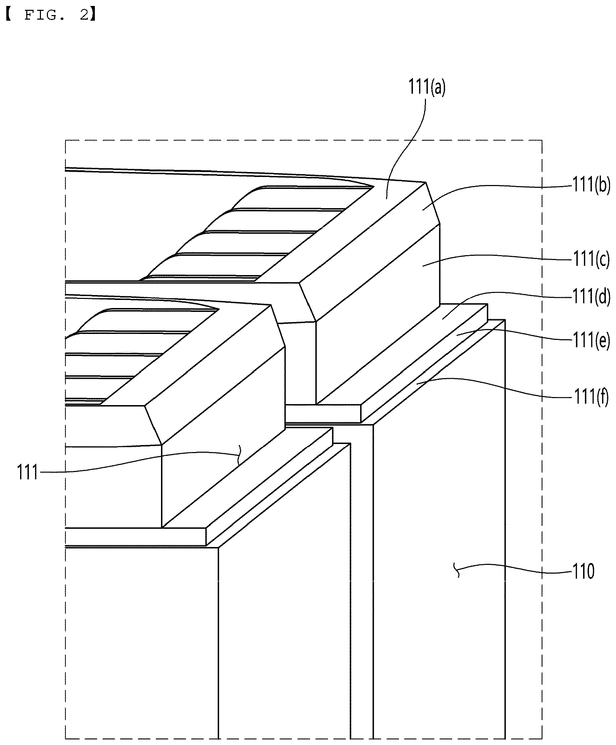

Since the battery pack shown in FIG. 2 has an external shape in which the pair of battery modules 100 is disposed in left-right symmetry and the cable 200 and the connection terminal 300 are provided between the battery modules 100, as described above, it is advantageous for the battery pack to be mounted in a robot manufactured in a human shape; however, the device is not particularly restricted as long as the device has a left-right symmetry structure.

Next, the battery module 100 will be described in detail.

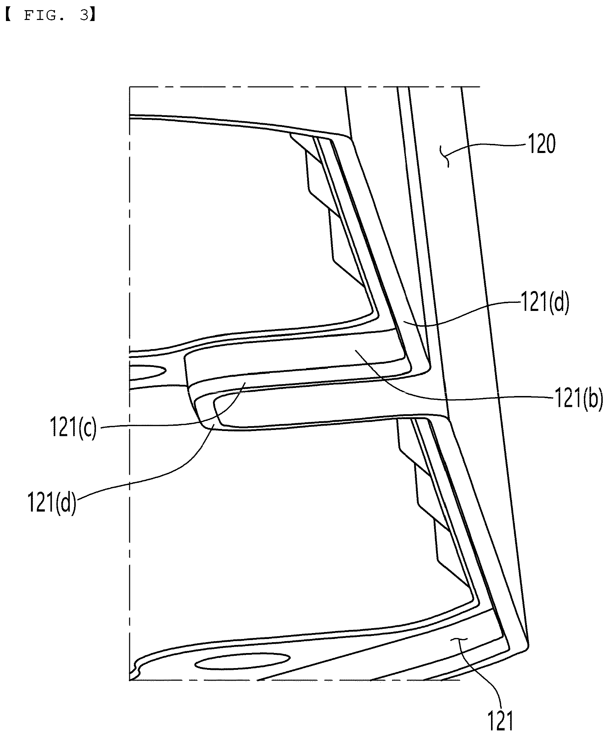

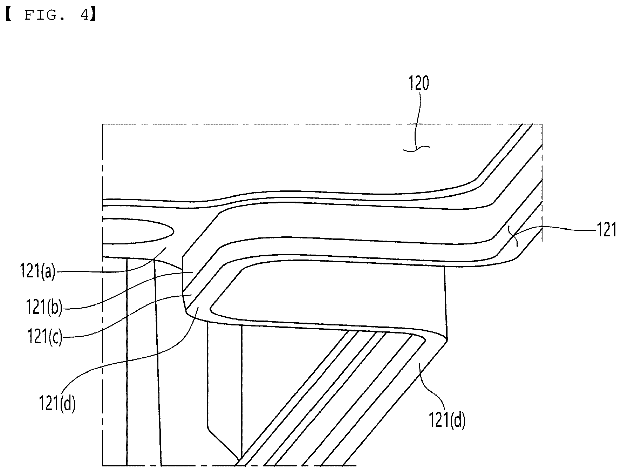

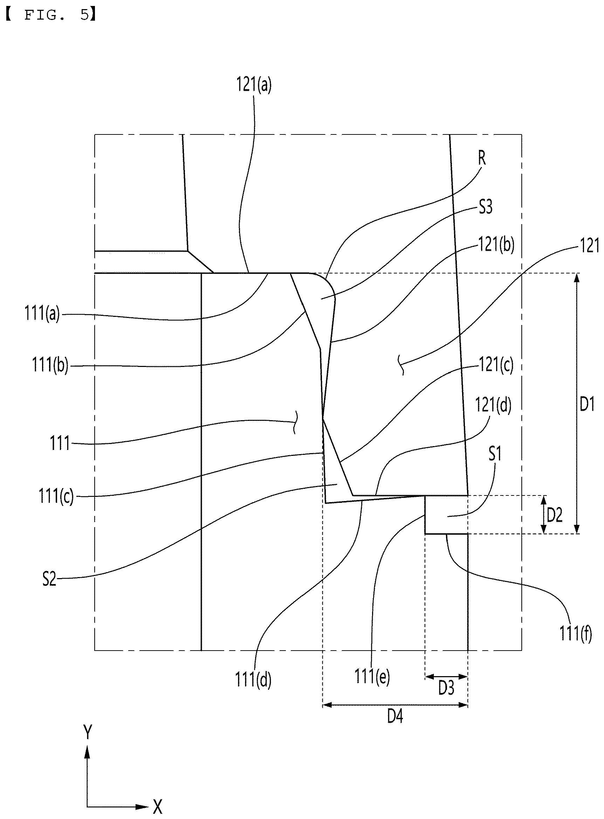

FIG. 2 is an enlarged perspective view of a lower case corresponding to part A of FIG. 1, FIG. 3 is an enlarged perspective view of an upper case corresponding to part A of FIG. 1, FIG. 4 is an enlarged perspective view of the upper case shown in FIG. 3 when viewed from another angle, and FIG. 5 is a sectional view illustrating a coupling structure between the lower case and the upper case corresponding to part A of FIG. 1.

Referring to FIGs. 2 to 5, the battery module 100 according to the present invention includes a lower case 110, an upper case 120, and a plurality of battery cells (not shown).

As previously shown in FIG. 1, the external shape of one battery module 100 is approximately hexahedral, and each of the lower case 110 and the upper case 120, which is seated on the lower case 110, has an empty hexahedral shape.

Meanwhile, ribs provided at the lower case 110 and the upper case 120 are brought into tight contact with each other, whereby excellent waterproof and anti-vibration effects are achieved.

That is, a lower rib 111 provided at a tip end of the lower case 110 and an upper rib 121 provided at a tip end of the upper case 120 are brought into tight contact with each other.

More specifically, the lower rib 111 provided at the lower case 110 is constituted by a first lower surface 111(a), a second lower surface 111(b), a third lower surface 111(c), a fourth lower surface 111(d), a fifth lower surface 111(e), and a sixth lower surface 111(f).

That is, when viewed based on a bottom surface of the lower case 110, the first lower surface 111(a) is located horizontally, and the second lower surface 111(b) is inclined downwards toward the outside of the lower case 110 by a predetermined angle.

The third lower surface 111(c) has a larger angle of inclination than the second lower surface 111(b), and the fourth lower surface 111(d) is inclined upwards toward the outside of the lower case 110 by a predetermined angle.

In addition, the fifth lower surface 111(e) extends in a vertical direction, and the sixth lower surface 111(f) extends horizontally in a direction toward the outside of the lower case 110 while being perpendicular to the fifth lower surface 111(e). The first lower surface 111(a) to the sixth lower surface 111(f) are continuously connected to each other.

The upper rib 121 provided at the upper case 120 has a shape in which a first upper surface 121(a), a second upper surface 121(b), a third upper surface 121(c), and a fourth upper surface 121(d) are continuously connected to each other.

More specifically, the first upper surface 121(a) is located horizontally, and the second upper surface 121(b) is inclined downwards toward the inside of the upper case 120 by a predetermined angle. In addition, the third upper surface 121(c) is inclined downwards toward the outside of the upper case 120 by a predetermined angle, and the fourth upper surface 121(d) extends horizontally in a direction toward the outside of the upper case 120.

When the lower rib 111 and the upper rib 121 having the above constructions are engaged with each other, the lower case 110 and the upper case 120 are brought into tight contact with each other by one face contact and two line contacts.

That is, the first lower surface 111(a) of the lower rib 111 and the first upper surface 121(a) of the upper rib 121 are brought into face contact with each other. In addition, the third lower surface 111(c) of the lower rib 111 may abut the border line between the second upper surface 121(b) and the third upper surface 121(c), and the border line between the fourth lower surface 111(d) and the fifth lower surface 111(e) may abut the fourth upper surface 121(d).

Consequently, it is very difficult for external water or dust to be introduced into a space portion defined by the lower case 110 and the upper case 120.

Specifically, it is very difficult for moisture or dust to be introduced into the case due to primary blocking by line contact among the fourth upper surface 121(d), the fourth lower surface 111(d), and the fifth lower surface 111(e), secondary blocking by line contact among the third lower surface 111(c), the second upper surface 121(b), and the third upper surface 121(c), and face contact between the first lower surface 111(a) and the first upper surface 121(a).

Furthermore, it is possible to perform excellent waterproof and anti-vibration functions even though some tolerance occurs at the lower rib 111 or the upper rib 121 during a manufacturing process.

That is, each of the lower rib 111 or the upper rib 121 is bent or cut several times, a first space portion S1 is provided in the vicinities of the fifth lower surface 111(e) and the sixth lower surface 111(f), a second space portion S2 is provided in the vicinities of the third lower surface 111(c) and the third upper surface 121(c), a third space portion S3 is provided in the vicinities of the second lower surface 111(b) and the second upper surface 121(b), and a part that connects the first upper surface 121(a) and the second upper surface 121(b) to each other is constituted by a curved portion R having a predetermined radius of curvature.

Even though the lower rib 111, the upper rib 121, or both each have a predetermined tolerance range, therefore, one face contact and two line contacts are still possible.

Meanwhile, in order to achieve sufficient waterproof and anti-vibration effects, it is preferable for the length D1 from the first lower surface to the sixth lower surface to be 3 mm or more, it is preferable for the length D2 of the fifth lower surface to be 0.3 to 0.5 mm, it is preferable for the length D3 of the sixth lower surface to be 0.3 to 0.5 mm, and it is preferable for the length D4 from the contact point between the second lower surface and the third lower surface to an outer surface of the lower case to be 1.5 to 2.0 mm.

In addition, based on the bottom surface of the lower case 110, it is preferable for the third lower surface 111(c) to have an angle of greater than 90° to 92°, it is preferable for the fourth lower surface 111(d) to have an angle of greater than 0° to 2°, it is preferable for the second upper surface 121(b) to have an angle of 86° to less than 90°, and it is preferable for the third upper surface 121(c) to have an angle of greater than 90° to 94°.

Those skilled in the art to which the present invention pertains will appreciate that various applications and modifications are possible within the category of the present invention based on the above description.

### (Description of Reference Symbols)

100: Battery module
110: Lower case
111: Lower rib
111(a): First lower surface 111(b): Second lower surface
111(c): Third lower surface 111(d): Fourth lower surface
111(e): Fifth lower surface 111(f): Sixth lower surface
120: Upper case
121: Upper rib
121(a): First upper surface 121(b): Second upper surface
121(c): Third upper surface 121(d): Fourth upper surface
200: Cable
210: First cable
220: Second cable
230: Third cable
240: Fourth cable
300: Connection terminal
S1: First space portion S2: Second space portion
S3: Third space portion
D1: Length from first lower surface to sixth lower surface
D2: Length of fifth lower surface
D3: Length of sixth lower surface
D4: Distance from contact point between second lower surface and third lower surface to outer surface of lower case
R: Curved portion

## Claims

1. A battery module (100) comprising:
a lower case (110);
an upper case (120) seated on the lower case (110); and
a battery cell received in a space portion defined by the lower case (110) and the upper case (120);
wherein a lower rib (111) provided at a tip end of the lower case (110) and an upper rib (121) provided at a tip end of the upper case (120) are in tight contact with each other, and
**characterized in that** the tight contact includes one face contact and one or more line contacts.

2. The battery module (100) according to claim 1, wherein the lower rib (111) of the lower case (110) has a shape configured such that a first lower surface (111a) located horizontally based on a bottom surface of the lower case (110), a second lower surface (111b) inclined downwards toward an outside of the lower case (110) by a predetermined angle, a third lower surface (111c) having a larger angle of inclination than the second lower surface (111b), and a fourth lower surface (111d) are continuously connected to each other, and
wherein the upper rib (121) of the upper case (120) has a shape configured such that a first upper surface (121a) located horizontally so as to be brought into face contact with the first lower surface (111a) of the lower case (110), a second upper surface (121b) inclined downwards toward an inside of the upper case (120) by a predetermined angle to be brought into line contact with the third lower surface (111c) of the lower case (110), a third upper surface (121c) inclined downwards toward an outside of the upper case (120) by a predetermined angle, and a fourth upper surface (121d) are continuously connected to each other.

3. The battery module (100) according to claim 1, wherein the lower case (110) and the upper case (120) are brought into tight contact with each other by one face contact and two line contacts.

4. The battery module (100) according to claim 3, wherein the lower rib (111) of the lower case (110) has a shape configured such that a first lower surface (111a) located horizontally based on a bottom surface of the lower case (110), a second lower surface (111b) inclined downwards toward an outside of the lower case (110) by a predetermined angle, a third lower surface (111c) having a larger angle of inclination than the second lower surface (111b), a fourth lower surface (111d) inclined upwards toward the outside of the lower case (110) by a predetermined angle, and a fifth lower surface (111e) extending in a vertical direction are continuously connected to each other, and
wherein the upper rib (121) of the upper case (120) has a shape configured such that a first upper surface (121a) located horizontally so as to be brought into face contact with the first lower surface (111a) of the lower case (110), a second upper surface (121b) inclined downwards toward an inside of the upper case (120) by a predetermined angle so as to be brought into line contact with the third lower surface (111c) of the lower case (110), a third upper surface (121c) inclined downwards toward an outside of the upper case (120) by a predetermined angle, and a fourth upper surface (121d) extending in a direction toward the outside of the upper case (120) to be brought into line contact with the lower case (110) at a position at which the fourth lower surface (111d) and the fifth lower surface (111e) join each other are continuously connected to each other.

5. The battery module (100) according to claim 4, wherein the lower rib (111) of the lower case (110) further includes a sixth lower surface (111f) extending in a direction toward the outside of the lower case (110) while being perpendicular to the fifth lower surface (111e).

6. The battery module (100) according to claim 5, wherein an edge at which an outer surface of the upper rib (121) and the fourth upper surface (121d) is located on a same vertical line as an outer surface of the lower rib (111).

7. A battery pack comprising the battery module (100) according to any one of claims 1 to 6.

8. The battery pack according to claim 7, wherein the battery pack comprises:
a pair of battery modules (100) spaced apart from each other by a predetermined distance;
a cable (200) electrically connecting the pair of battery modules (100) to each other; and
a connection terminal (300) fastened to a device in a state of being connected to the cable (200).

9. The battery pack according to claim 8, wherein the device is a robot.

10. The battery pack according to claim 8, wherein the cable (200) comprises:
a first cable (210) configured to connect the pair of battery modules (100) to each other;
a second cable (220) having one side connected to one of the battery modules (100) and the other side connected to the connection terminal (300); and
a third cable (230) having one side connected to the other battery module (100) and the other side connected to the connection terminal (300).

11. The battery pack according to claim 10, wherein the cable (200) further comprises a fourth cable (240) configured to perform wireless communication.

## Patentansprüche

1. Batteriemodul (100), umfassend:
ein unteres Gehäuse (110);
ein oberes Gehäuse (120), welches an dem unteren Gehäuse (110) sitzt; und
eine Batteriezelle, welche in einem Raumabschnitt aufgenommen ist, welcher durch das untere Gehäuse (110) und das obere Gehäuse (120) definiert ist;
wobei eine untere Rippe (111), welche an einem Spitzenende des unteren Gehäuses (110) bereitgestellt ist, und eine obere Rippe (121), welche an einem Spitzenende des oberen Gehäuses (120) bereitgestellt ist, miteinander in engem Kontakt sind, und
**dadurch gekennzeichnet, dass** der enge Kontakt einen Flächenkontakt und einen oder mehrere Linienkontakte umfasst.

2. Batteriemodul (100) nach Anspruch 1, wobei die untere Rippe (111) des unteren Gehäuses (110) eine Form aufweist, welche derart eingerichtet ist, dass eine erste untere Fläche (111a), welche auf Grundlage einer Bodenfläche des unteren Gehäuses (110) horizontal angeordnet ist, eine zweite untere Fläche (111b), welche in Richtung einer Außenseite des unteren Gehäuses (110) um einen vorbestimmten Winkel nach unten geneigt ist, eine dritte untere Fläche (111c), welche einen größeren Neigungswinkel als die zweite untere Fläche (111b) aufweist, und eine vierte untere Fläche (111d) kontinuierlich miteinander verbunden sind, und
wobei die obere Rippe (121) des oberen Gehäuses (120) eine Form aufweist, welche derart eingerichtet ist, dass eine erste obere Fläche (121a), welche horizontal angeordnet ist, um in Flächenkontakt mit der ersten unteren Fläche (111a) des unteren Gehäuses (110) gebracht zu werden, eine zweite obere Fläche (121b), welche in Richtung einer Innenseite des oberen Gehäuses (120) um einen vorbestimmten Winkel nach unten geneigt ist, um in Linienkontakt mit der dritten unteren Fläche (111c) des unteren Gehäuses (110) gebracht zu werden, eine dritte obere Fläche (121c), welche in Richtung einer Außenseite des oberen Gehäuses (120) um einen vorbestimmten Winkel nach unten geneigt ist, und eine vierte obere Fläche (121d) kontinuierlich miteinander verbunden sind.

3. Batteriemodul (100) nach Anspruch 1, wobei das untere Gehäuse (110) und das obere Gehäuse (120) durch einen Flächenkontakt und zwei Linienkontakte in engen Kontakt miteinander gebracht werden.

4. Batteriemodul (100) nach Anspruch 3, wobei die untere Rippe (111) des unteren Gehäuses (110) eine Form aufweist, welche derart eingerichtet ist, dass eine erste untere Fläche (111a), welche auf Grundlage einer Bodenfläche des unteren Gehäuses (110) horizontal angeordnet ist, eine zweite untere Fläche (111b), welche in Richtung einer Außenseite des unteren Gehäuses (110) um einen vorbestimmten Winkel nach unten geneigt ist, eine dritte untere Fläche (111c), welche einen größeren Neigungswinkel als die zweite untere Fläche (111b) aufweist, eine vierte untere Fläche (111d), welche in Richtung der Außenseite des unteren Gehäuses (110) um einen vorbestimmten Winkel nach oben geneigt ist, und eine fünfte untere Fläche (111e), welche sich in einer vertikalen Richtung erstreckt, kontinuierlich miteinander verbunden sind, und
wobei die obere Rippe (121) des oberen Gehäuses (120) eine Form aufweist, welche derart eingerichtet ist, dass eine erste obere Fläche (121a), welche horizontal angeordnet ist, um in Flächenkontakt mit der ersten unteren Fläche (111a) des unteren Gehäuses (110) gebracht zu werden, eine zweite obere Fläche (121b), welche in Richtung einer Innenseite des oberen Gehäuses (120) um einen vorbestimmten Winkel nach unten geneigt ist, um in Linienkontakt mit der dritten unteren Fläche (111c) des unteren Gehäuses (110) gebracht zu werden, eine dritte obere Fläche (121c), welche in Richtung einer Außenseite des oberen Gehäuses (120) um einen vorbestimmten Winkel nach unten geneigt ist, und eine vierte obere Fläche (121d), welche sich in einer Richtung in Richtung der Außenseite des oberen Gehäuses (120) erstreckt, um an einer Position, an welcher die vierte untere Fläche (111d) und die fünfte untere Fläche (111e) miteinander verbunden sind, in Linienkontakt mit dem unteren Gehäuse (110) gebracht zu werden, kontinuierlich miteinander verbunden sind.

5. Batteriemodul (100) nach Anspruch 4, wobei die untere Rippe (111) des unteren Gehäuses (110) ferner eine sechste untere Fläche (111f) umfasst, welche sich in einer Richtung in Richtung der Außenseite des unteren Gehäuses (110) erstreckt, während sie senkrecht zu der fünften unteren Fläche (111e) ist.

6. Batteriemodul (100) nach Anspruch 5, wobei ein Rand, an welchem eine äußere Fläche der oberen Rippe (121) und die vierte obere Fläche (121d) sind, an einer gleichen vertikalen Linie wie eine äußere Fläche der unteren Rippe (111) angeordnet ist.

7. Batteriepack, umfassend das Batteriemodul (100) nach einem der Ansprüche 1 bis 6.

8. Batteriepack nach Anspruch 7, wobei der Batteriepack umfasst:
ein Paar von Batteriemodulen (100), welche um einen vorbestimmten Abstand voneinander beabstandet sind;
ein Kabel (200), welche das Paar von Batteriemodulen (100) elektrisch miteinander verbindet; und
einen Verbindungsanschluss (300), welcher in einem mit dem Kabel (200) verbundenen Zustand an einer Vorrichtung befestigt ist.

9. Batteriepack nach Anspruch 8, wobei die Vorrichtung ein Roboter ist.

10. Batteriepack nach Anspruch 8, wobei das Kabel (200) umfasst:
ein erstes Kabel (210), welches dazu eingerichtet ist, das Paar von Batteriemodulen (100) miteinander zu verbinden;
ein zweites Kabel (220), welches eine mit einem der Batteriemodule (100) verbundene Seite und die andere Seite mit dem Verbindungsanschluss (300) verbunden aufweist; und
ein drittes Kabel (230), welches eine mit dem anderen Batteriemodul (100) verbundene Seite und die andere Seite mit dem Verbindungsanschluss (300) verbunden aufweist.

11. Batteriepack nach Anspruch 10, wobei das Kabel (200) ferner ein viertes Kabel (240) umfasst, welches dazu eingerichtet ist, eine drahtlose Kommunikation durchzuführen.

## Revendications

1. Module de batterie (100) comprenant :
un boîtier inférieur (110) ;
un boîtier supérieur (120) placé sur le boîtier inférieur (110) ; et
une cellule de batterie reçue dans une partie d'espace définie par le boîtier inférieur (110) et le boîtier supérieur (120) ;
dans lequel une nervure inférieure (111) prévue à un bout du boîtier inférieur (110) et
une nervure supérieure (121) prévue à un bout du boîtier supérieur (120) sont en contact étroit l'une avec l'autre, et
**caractérisé en ce que** le contact étroit comprend un contact de face et un ou plusieurs contacts de ligne.

2. Module de batterie (100) selon la revendication 1, dans lequel la nervure inférieure (111) du boîtier inférieur (110) a une forme configurée de sorte qu'une première surface inférieure (111a) située horizontalement sur la base d'une surface de fond du boîtier inférieur (110), une deuxième surface inférieure (111b) inclinée vers le bas vers un extérieur du boîtier inférieur (110) selon un angle prédéterminé, une troisième surface inférieure (111c) ayant un angle d'inclinaison plus grand que la deuxième surface inférieure (111b), et une quatrième surface inférieure (111d) soient reliées en continu les unes aux autres, et
dans lequel la nervure supérieure (121) du boîtier supérieur (120) a une forme configurée de sorte qu'une première surface supérieure (121a) située horizontalement de manière à être mise en contact de face avec la première surface inférieure (111a) du boîtier inférieur (110), une deuxième surface supérieure (121b) inclinée vers le bas vers un intérieur du boîtier supérieur (120) selon un angle prédéterminé pour être mise en contact de ligne avec la troisième surface inférieure (111c) du boîtier inférieur (110), une troisième surface supérieure (121c) inclinée vers le bas vers un extérieur du boîtier supérieur (120) selon un angle prédéterminé, et une quatrième surface supérieure (121d) soient reliées en continu les unes aux autres.

3. Module de batterie (100) selon la revendication 1, dans lequel le boîtier inférieur (110) et le boîtier supérieur (120) sont mis en contact étroit l'un avec l'autre par un contact de face et deux contacts de ligne.

4. Module de batterie (100) selon la revendication 3, dans lequel la nervure inférieure (111) du boîtier inférieur (110) a une forme configurée de sorte qu'une première surface inférieure (111a) située horizontalement sur une surface de fond du boîtier inférieur (110), une deuxième surface inférieure (111b) inclinée vers le bas vers un extérieur du boîtier inférieur (110) selon un angle prédéterminé, une troisième surface inférieure (111c) ayant un angle d'inclinaison plus grand que la deuxième surface inférieure (111b), une quatrième surface inférieure (111d) inclinée vers le haut vers l'extérieur du boîtier inférieur (110) selon un angle prédéterminé, et une cinquième surface inférieure (111e) s'étendant dans une direction verticale soient reliées en continu les unes aux autres, et
dans lequel la nervure supérieure (121) du boîtier supérieur (120) a une forme configurée de sorte qu'une première surface supérieure (121a) située horizontalement de manière à être mise en contact de face avec la première surface inférieure (111a) du boîtier inférieur (110), une deuxième surface supérieure (121b) inclinée vers le bas vers un intérieur du boîtier supérieur (120) selon un angle prédéterminé de manière à être mise en contact de ligne avec la troisième surface inférieure (111c) du boîtier inférieur (110), une troisième surface supérieure (121c) inclinée vers le bas vers un extérieur du boîtier supérieur (120) selon un angle prédéterminé, et une quatrième surface supérieure (121d) s'étendant dans une direction vers l'extérieur du boîtier supérieur (120) pour être mise en contact de ligne avec le boîtier inférieur (110) à une position à laquelle la quatrième surface inférieure (111d) et la cinquième surface inférieure (111e) se rejoignent soient reliées en continu les unes aux autres.

5. Module de batterie (100) selon la revendication 4, dans lequel la nervure inférieure (111) du boîtier inférieur (110) comporte en outre une sixième surface inférieure (111f) s'étendant dans une direction vers l'extérieur du boîtier inférieur (110) tout en étant perpendiculaire à la cinquième surface inférieure (111e).

6. Module de batterie (100) selon la revendication 5, dans lequel un bord au niveau duquel une surface extérieure de la nervure supérieure (121) et la quatrième surface supérieure (121d) est situé sur une même ligne verticale qu'une surface extérieure de la nervure inférieure (111).

7. Bloc-batterie comprenant le module de batterie (100) selon l'une quelconque des revendications 1 à 6.

8. Bloc-batterie selon la revendication 7, dans lequel le bloc-batterie comprend :
une paire de modules de batterie (100) espacés l'un de l'autre d'une distance prédéterminée ;
un câble (200) reliant électriquement la paire de modules de batterie (100) l'un à l'autre ; et
une borne de connexion (300) fixée à un dispositif dans un état où elle est connectée au câble (200).

9. Bloc-batterie selon la revendication 8, dans lequel le dispositif est un robot.

10. Bloc-batterie selon la revendication 8, dans lequel le câble (200) comprend :
un premier câble (210) configuré pour connecter la paire de modules de batterie (100) l'un à l'autre ;
un deuxième câble (220) ayant un côté connecté à l'un des modules de batterie (100) et l'autre côté connecté à la borne de connexion (300) ; et
un troisième câble (230) ayant un côté connecté à l'autre module de batterie (100) et l'autre côté connecté à la borne de connexion (300).

11. Bloc-batterie selon la revendication 10, dans lequel le câble (200) comprend en outre un quatrième câble (240) configuré pour réaliser une communication sans fil.
